# FASCICULE DE BREVET EUROPEEN

(11) **EP 0 856 162 B1**
(45) Date de publication et mention de la délivrance du brevet: **03.04.2002**
(21) Numéro de dépôt: 96934914.1
(22) Date de dépôt: 15.10.1996
(51) Int. Cl.: G01S 5/14

(54) **RECEPTEUR DE DETERMINATION D'UNE POSITION A PARTIR DE RESEAUX DE SATELLITES**
EMPFÄNGER FÜR DIE ORTSBESTIMMUNG MIT SATELLITEN
RECEIVER FOR DETERMINING A POSITION USING SATELLITE NETWORKS

(30) Priorité: 17.10.1995 FR 9512146
(43) Date de publication de la demande: 05.08.1998
(73) Titulaire: THALES AVIONICS S.A., 78141 Vélizy Villacoublay Cédex (FR)
(72) Inventeur: RENARD, Alain, F-92402 Courbevoie Cédex (FR); GUILLARD, Patrice, F-92402 Courbevoie Cédex (FR)
(74) Mandataire: Guérin, Michel
(86) Numéro de dépôt international: FR9601608
(87) Numéro de publication internationale: WO9714977

(56) Documents cités:
- EP-A- 0 488 739
- EP-A- 0 523 938
- US-A- 4 521 916
- PATENT ABSTRACTS OF JAPAN vol. 18, no. 670 (P-1845), 16 Décembre 1994 & JP,A,06 265624 (JAPAN RADIO), 22 Septembre 1994,
- POSITION LOCATION AND NAVIGATION SYMPOSIUM (PLANS), LAS VEGAS, APR. 11 - 15, 1994, no. -, 11 Avril 1994, INSTITUTE OF ELECTRICAL AND ELECTRONICS ENGINEERS, pages 762-768, XP000498009 VIEWEG S ET AL: "RESULTS OF COMBINED GPS/GLONASS DATA PROCESSING"
- OCEAN TECHNOLOGIES AND OPPORTUNITIES IN THE PACIFIC FOR THE 90'S, HONOLULU, OCT. 1 - 3, 1991, vol. VOL. 1, no. -, 1 Octobre 1991, INSTITUTE OF ELECTRICAL AND ELECTRONICS ENGINEERS, pages 116-119, XP000279684 WAI L TSANG ET AL: "MARITIME NAVIGATION AND COMMUNICATION USING A GPS/GLONASS RECEIVER"
- PROCEEDINGS OF THE NATIONAL TELESYSTEMS CONFERENCE, ATLANTA, MARCH 26 - 27, 1991, vol. 1, 26 Mars 1991, INSTITUTE OF ELECTRICAL AND ELECTRONICS ENGINEERS, pages 205-210, XP000266754 CHAMBERLAIN S M: "COMBINED GPS/GLONASS NAVIGATION"
- PATENT ABSTRACTS OF JAPAN vol. 95, no. 8, 29 Septembre 1995 & JP,A,07 128423 (JAPAN RADIO)
- PATENT ABSTRACTS OF JAPAN vol. 18, no. 670 (P-1845), 16 Décembre 1994 & JP,A,06 265625 (JAPAN RADIO), 22 Septembre 1994,

## Description

L'invention concerne les systèmes de détermination de la position d'un point par rapport à la terre, à partir de la réception de signaux hertziens émis par une constellation de satellites en orbite autour de la terre.

Il existe actuellement deux systèmes de positionnement global permettant cette détermination de position presque en n'importe quel point de la terre. Ce sont respectivement le système GPS ("Global Positionning System") et le système GLONASS ("Global Orbiting Navigation Satellite System").

Tous deux utilisent un réseau de satellites tournant autour de la terre, chaque satellite émettant régulièrement des signaux radio codés qu'un récepteur peut recevoir pour calculer sa position exacte en longitude, latitude et altitude, ainsi d'ailleurs que sa vitesse et l'heure exacte. Un système complémentaire, dénommé RGIC ("Random Geostationary Integrity Channel") se met également en place; il utilise des satellites géostationnaires émettant des signaux à destination des régions du globe au dessus desquelles ils sont situés.

Le système GPS transmet des signaux radio à spectre étalé, sur une fréquence porteuse L1 égale à 1575,42 MHz, ainsi que des signaux sur une fréquence porteuse auxiliaire L2 de 1227,6 MHz. On ne s'intéressera ici qu'à la fréquence L1, mais les principes exposés ci-après seraient transposables, si le besoin s'en faisait sentir, pour la fréquence L2.

Le spectre des signaux est étalé par des codes pseudo-aléatoires, c'est-à-dire que le signal sur la fréquence porteuse L1 est modulé par une séquence binaire pseudo-aléatoire répétitive, appelée également code PRN (pour "Pseudo-Random Noise"); le système utilise en pratique deux catégories de codes PRN qui sont respectivement ;
- les codes C/A ("Coarse Acquisition"), émis à une fréquence de bits de 1,023 MHz; leur longueur est de 1023 bits et la durée d'une séquence complète est de 1 milliseconde; les codes C/A permettent une détermination de position approximative,
- et les codes P (pour "Precise"), émis à une fréquence de 10,23 MHz et permettant une localisation plus précise.

Les transitions logiques du code sont synchronisées sur la phase de la porteuse L1, et la modulation est une modulation de phase d'un type bien défini (BPSK).

Les codes C/A sont accessibles au public et doivent être générés localement dans les récepteurs pour trois raisons : d'abord, ils permettent de détecter et démoduler les signaux reçus, ces signaux étant noyés dans un niveau de bruit très élevé (20 à 30 dB au dessus du signal); la détection se fait par corrélation entre le code reçu du satellite et un code identique produit localement; ensuite, ils permettent d'identifier le satellite émetteur (dans le système GPS un code C/A particulier est affecté à chaque satellite); et enfin, ils permettent de mesurer des déphasages temporels qui sont la base indispensable pour un calcul précis de position.

Les codes P ne sont pas accessibles au public : ils sont réservés à des usages essentiellement militaires, et peuvent d'ailleurs être cryptés à l'émission.

Les signaux émis sur la fréquence porteuse L1 sont par ailleurs codés par des données binaires à cadence lente (50 bauds) qui représentent des informations de navigation du satellite, c'est-à-dire des données utiles aux calculs de position effectués dans le récepteur. Ces données de navigation sont des éphémérides permettant d'une part de calculer la position exacte (précision inférieure au mètre) qu'occupe un satellite à n'importe quel instant, et d'autre part de donner une référence temporelle commune à tous les récepteurs qui utilisent le système. La modulation de la porteuse L1 par les données est, là encore, une modulation de phase.

La distance entre un satellite et le récepteur est déterminée par mesure de la durée de propagation, à la vitesse de la lumière, du signal radio entre un satellite et la terre. Elle est donc déterminée en particulier par une mesure de l'écart temporel entre l'instant d'émission, par le satellite, d'un bit caractéristique (bit "epoch") du code pseudo-aléatoire et l'instant de réception, par le récepteur, de ce bit caractéristique.

Les distances du récepteur par rapport à trois satellites différents permettent de déterminer la position du récepteur dans un repère terrestre fixe dès lors que le récepteur connaît la position des satellites dans ce repère à l'instant de la mesure. Un quatrième satellite permet d'éliminer l'écart entre l'horloge du récepteur et l'horloge du système GPS : la position des satellites à chaque instant est définie par référence à une horloge générale de système et les données de navigation émises permettent au récepteur de connaître cette référence temporelle. La mesure se fait en deux ou trois itérations en raison du fait qu'au départ, n'ayant pas la référence exacte de temps, on ne peut se caler sur l'horloge transmise par les satellites qu'avec une approximation de 10 ou 20 ms due au temps de propagation des signaux des satellites vers la terre.

La vitesse relative du récepteur par rapport aux satellites peut également être déterminée par mesure de l'effet Doppler sur la fréquence porteuse L1 reçue. On en déduit la vitesse du récepteur dans le repère fixe du géoïde terrestre.

Le système RGIC est très proche du système GPS. Le système GPS utilise des satellites tournants; le système RGIC utilise des satellites géostationnaires; il vient en complément du système GPS pour pallier des insuffisances ou des risques de pannes de ce dernier. Les types de signaux restent les mêmes, la fréquence porteuse L1 est la même. Des codes pseudo-aléatoires de même longueur et même fréquence sont utilisés pour identifier les satellites; ils sont différents des codes des satellites GPS. La fréquence des données de navigation est de 250 bauds au lieu de 50 bauds. Les données sont codées par un algorithme de Viterbi réalisant une compression de l'information.

Le système GLONASS fonctionne sur des principes généraux analogues, mais des différences significatives peuvent être notées :
- Le repère terrestre choisi n'est pas le même : le centre de la terre n'est pas exactement identique à celui qui est choisi pour GPS. La direction du Nord n'est pas tout-à-fait la même. Si on veut une position GLONASS à partir d'un récepteur GPS il faut donc une transposition à partir d'une table de conversion ou un logiciel de conversion.
- Dans le système GLONASS les données de navigation sont émises à 100 bauds et non 50, et la fréquence du code pseudo-aléatoire est de 511 kHz.
- D'autre part, la fréquence porteuse L1 n'est pas unique. Chaque satellite émet sur une fréquence L1 particulière, et c'est cette fréquence qui permet de l'identifier. Le code pseudo-aléatoire est le même pour tous les satellites. Il ne sert pas à l'identification du satellite mais seulement à l'extraction du signal dans le bruit (désétalement de spectre) et à la détermination des écarts temporels pour la mesure précise de distance entre le récepteur et le satellite. La bande de fréquences L1 utilisées par l'ensemble du système GLONASS est assez éloignée de celle du système GPS; elle va d'environ 1 600 MHz à environ 1 615 MHz. Les fréquences L2 sont également multiples.

Dans ces conditions, on comprend qu'un récepteur conçu pour recevoir des signaux GPS ne permet pas de calculer une position à partir des signaux radio envoyés par les satellites GLONASS, et réciproquement.

Il existe cependant un besoin important pour pouvoir utiliser indifféremment l'un ou l'autre système, et également les systèmes complémentaires tels que RGIC. En effet, si certains satellites d'un système ne sont pas correctement maintenus, ou si des raisons politiques font qu'ils sont temporairement inutilisables, les conséquences peuvent être très graves pour les utilisateurs qui auront établis leurs modes de fonctionnement sur les bases de l'un ou l'autre des systèmes. Ceci est d'autant plus important qu'actuellement la sécurité de nombreux systèmes commence à se fonder justement sur la détection de position par satellite. C'est le cas notamment pour la navigation maritime et la navigation aérienne qui reposent de plus en plus sur les systèmes GPS et GLONASS. Par exemple, on envisage aujourd'hui de systématiser des procédés d'aide à l'atterrissage fondés sur l'utilisation de signaux des réseaux de satellites existants.

Il est bien sûr toujours possible de disposer de deux récepteurs spécialisés et d'utiliser l'un quand l'autre ne peut pas l'être. Cela double le prix pour l'utilisateur. Ou encore, on peut construire des récepteurs mixtes comportant un double système de réception. Mais un tel récepteur coûte cher car il faut des canaux GPS en nombre égal au nombre de satellites GPS qu'on veut recevoir en même temps (au moins quatre), et un nombre de canaux GLONASS égal au nombre de satellites GLONASS qu'on veut recevoir en même temps (au moins quatre).

Il existe donc un besoin pour un récepteur moins cher qui pourrait recevoir des signaux GPS ou GLONASS ou RGIC, ou même d'autres systèmes futurs, et qui ne serait pas constitué par une simple juxtaposition (coûteuse) de deux types de récepteurs différents.

L'invention propose par conséquent une nouvelle architecture de récepteur de signaux par satellite qui permet d'obtenir à un coût raisonnable un récepteur utilisable à la fois avec un système à une seule fréquence porteuse L1 (tel que GPS) et avec un système à plusieurs fréquences porteuses L1 (tel que GLONASS). Cette architecture permet en particulier d'utiliser pour le traitement de signal numérique (partie complexe donc coûteuse du récepteur) des canaux banalisés pouvant recevoir indifféremment les signaux des deux systèmes.

On propose selon l'invention un récepteur de signaux satellites, apte à recevoir et traiter des signaux émis par des satellites appartenant à un réseau à une seule fréquence porteuse et des signaux émis par des satellites appartenant à un réseau à plusieurs fréquences porteuses, comme défini dans la revendication 1.

On notera que dans l'architecture proposée ici, on n'a pas autant de transpositions de fréquences différentes que de fréquences porteuses différentes. Cependant, pour des raisons pratiques, on prévoit que la chaîne de réception radiofréquence possède des voies de transposition et filtrage séparées pour les signaux du système monofréquence et pour les signaux du système multifréquence. Et il y a également de préférence des convertisseurs analogiques-numériques séparés. Mais les différents canaux de traitement de signal numérique sont banalisés et comportent une seule voie de traitement.

L'oscillateur local à contrôle numérique de phase travaille de préférence à une fréquence de calcul supérieure à deux fois la fréquence transposée la plus élevée transmise par la chaîne de réception radiofréquence.

Pour bien comprendre cette architecture originale, on indique ci-dessous sommairement quelques principes généraux sur lesquels elle repose.

L'hypothèse de base est que le récepteur doit s'adapter à la fois à un système monofréquence L1 et à un système multifréquence L1.
A. Le signal radio, reçu par une antenne, subit au moins une transposition de fréquence porteuse, et au moins un filtrage en bande large permettant d'accepter indifféremment toutes les différentes fréquences porteuses du système multifréquence. Il peut y avoir une transposition en plusieurs étapes avec des fréquences intermédiaires successives. Pour le système monofréquence, la transposition peut amener le signal de modulation jusqu'en bande de base plutôt que sur une fréquence intermédiaire. Pour le système multifréquence, la transposition amène sur une fréquence intermédiaire qui dépend de la fréquence porteuse reçue, et le filtrage en bande large laisse passer toutes les fréquences intermédiaires possibles correspondant aux différentes fréquences porteuses.
B. On convertit en numérique le signal transposé, à l'aide d'un convertisseur analogique-numérique dont la fréquence de travail est en principe nettement supérieure à deux fois la fréquence intermédiaire maximale reçue après transposition et filtrage.
C. Les signaux transposés en fréquence puis convertis numériquement sont appliqués en principe en parallèle à plusieurs canaux de traitement de signal (autant de canaux que de satellites qu'on veut recevoir simultanément). Chacun des canaux est capable de traiter des signaux du système monofréquence ou des signaux du système multifréquence. Les canaux sont identiques et sont programmables. La programmation consiste à fournir à chaque canal une indication, sous forme d'une commande numérique, de l'identification du réseau et du satellite qu'on souhaite utiliser.
D. Chaque canal comporte une boucle numérique d'asservissement de phase de porteuse et de phase de code pseudo-aléatoire, pour asservir en phase et en fréquence un code aléatoire généré localement et un code aléatoire identique reçu d'un satellite, en tenant compte de l'effet Doppler. La boucle reçoit donc le signal du satellite après transposition de fréquence et conversion analogique-numérique; et elle produit des signaux d'erreur de phase de porteuse et des signaux d'erreur de phase de code, qui sont utilisés pour maintenir cet asservissement de phase de porteuse et de phase de code.
E. La boucle d'asservissement utilise, pour l'asservissement de phase de code, un générateur de code pseudo-aléatoire local programmable (c'est-à-dire qu'il peut émettre des codes différents qu'on choisit en fonction du satellite dont on veut recevoir les signaux : code GLONASS ou un code GPS ou RGIC choisi); ce générateur est rythmé par une horloge dont le fonctionnement est contrôlé en phase et en fréquence par le signal d'erreur de phase de code engendré par la boucle;
F. La boucle d'asservissement utilise également, pour l'asservissement de phase de porteuse, un oscillateur local à contrôle numérique de phase, pouvant recevoir d'une part une consigne initiale et d'autre part le signal d'erreur de phase de porteuse; la valeur initiale est programmable et correspond à un asservissement sur une valeur de fréquence de satellite choisie parmi plusieurs (la fréquence GPS ou une fréquence GLONASS sélectionnée). La fréquence de travail de cet oscillateur local (c'est-à-dire la fréquence de calcul des échantillons de phase synthétisés numériquement, et non pas la fréquence de l'oscillation produite) est suffisamment élevée pour permettre de synthétiser n'importe quelle fréquence désirée appartenant à la bande de fréquences pouvant être converties par le convertisseur analogique-numérique.

Ces principes étant exposés, on comprendra que l'invention propose également un procédé pour recevoir dans un récepteur des signaux de satellites et déterminer une position de récepteur à partir des signaux reçus, les satellites appartenant soit à un premier réseau à une seule fréquence porteuse soit à un deuxième réseau à plusieurs fréquences porteuses, comme défini dans la revendication 10.

D'autres caractéristiques et avantages de l'invention apparaîtront à la lecture de la description détaillée qui suit et qui est faite en référence aux dessins annexés dans lesquels :
- la figure 1 représente la structure globale d'un récepteur de signaux satellites selon l'invention;
- la figure 2 représente des diagrammes de bandes de fréquences traitées dans la chaîne de réception de la figure 1.
- la figure 3 représente l'architecture des circuits de traitement de signaux numériques placés en aval de la chaîne de réception de signaux radiofréquences.

L'invention sera décrite en détail à propos d'un récepteur pouvant recevoir à la fois les signaux du réseau de satellites GPS (réseau à une seule fréquence porteuse L1) et les signaux du réseau de satellites GLONASS (réseau à plusieurs fréquences porteuses L1).

La structure globale du récepteur selon l'invention comprend une antenne radio 10 suivie d'un filtre 12 laissant passer toutes les fréquences porteuses L1 désirées. Ce filtre est de préférence un filtre à double bande, une bande très étroite (quelques MHz) pour la fréquence GPS de 1 575,42 MHz, et une bande plus large d'environ 1 597 à 1 617 MHz pour la totalité des fréquences GLONASS possibles.

Ce filtre est suivi d'un amplificateur radiofréquence 14 à faible bruit, et d'un nouveau filtre 16 de même type que le premier. Les signaux radiofréquence ainsi amplifiés et filtrés sont appliqués à un ensemble de circuits de transposition de fréquence 18, pour produire des signaux à fréquences intermédiaires plus faibles que les porteuses L1 mais conservant la modulation de phase de ces porteuses; la transposition de fréquence amène vers des fréquences qui peuvent être traitées par les circuits de traitement de signal qui suivent. L'ordre de grandeur des fréquences maximales de travail des circuits de traitement de signal rapide en silicium est d'environ 60 MHz. On choisit donc des fréquences intermédiaires beaucoup plus faibles que cette valeur.

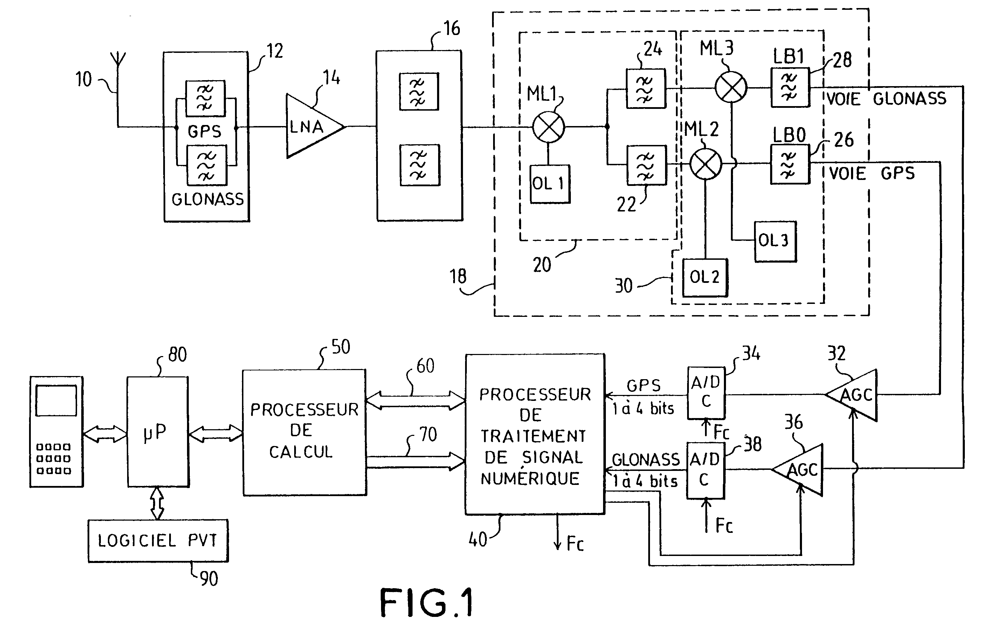

Bien que ce ne soit pas obligatoire, la transposition de fréquence se fait en général sur plusieurs étages en cascade, avec différentes fréquences intermédiaires de plus en plus basses. Dans l'exemple représenté à la figure 1 à titre d'illustration, on a un premier étage 20 de transposition vers une première fréquence intermédiaire, suivi d'un deuxième étage de transposition 30 vers des fréquences intermédiaires plus basses. Le premier étage 20 utilise un oscillateur local OL1, un mélangeur ML1, et des filtres 22, 24. Il transpose les signaux reçus, GPS ou GLONASS, en autant de signaux à fréquence intermédiaire qu'il y a de porteuses L1 dans le signal reçu : il y a une première fréquence intermédiaire qui résulte de la transposition de la fréquence porteuse GPS à 1575,42 MHz, et il y a par ailleurs autant de fréquences intermédiaires qu'il y a de fréquences porteuses pour GLONASS puisque le même oscillateur local OL1 est utilisé quelle que soit la fréquence GLONASS reçue. Les signaux mélangés passent en parallèle dans deux filtres séparés : filtre 22 à bande étroite centrée sur la fréquence intermédiaire résultant de la transposition de la porteuse GPS, ce filtre ne laissant passer que les signaux GPS; et filtre 24 à bande beaucoup plus large, capable de laisser passer toutes les fréquences intermédiaires résultant de la transposition des porteuses de GLONASS.

Le deuxième étage de transposition 30 fonctionne de la même manière, mais sur des voies séparées pour GPS et GLONASS.

La sortie du filtre 22 (voie GPS) est appliquée à un mélangeur ML2 qui reçoit par ailleurs la fréquence émise par un oscillateur local OL2; la sortie du mélangeur ML2 est filtrée par un filtre 26 centré sur la nouvelle fréquence intermédiaire résultant de la transposition, fréquence qu'on appellera ci-après fréquence porteuse transposée Ft0. Pour cette voie GPS, la fréquence porteuse transposée Ft0 peut d'ailleurs être nulle (à l'effet Doppler près) : le signal de sortie est alors une modulation en bande de base, affectée d'un effet Doppler. La largeur de bande LB0 du filtre 26 doit permettre de laisser passer le spectre de modulation du signal GPS, et bien sûr aussi la fréquence Doppler.

L'autre voie de transposition de fréquence, voie GLONASS, comprend un mélangeur ML3, un oscillateur OL3, et un filtre 28. La transposition crée une série de fréquences porteuses transposées Ft1 à Ftn : une pour chaque porteuse L1 de GLONASS. La bande passante LB1 du filtre 28 de la voie GLONASS est beaucoup plus large que celle du filtre GPS 26. Elle va de la fréquence transposée la plus basse (Ft1) jusqu'à la fréquence transposée la plus haute (Ftn). Et elle doit bien sûr prendre en compte aussi le spectre de modulation et l'effet Doppler sur ces deux fréquences extrêmes; la largeur de bande LB1 est donc d'au moins 15 ou 20 MHz.

Les oscillateurs locaux OL1, OL2, OL3 ont été représentés sur la figure 1 comme des éléments indépendants. En réalité, un synthétiseur de fréquence unique, calé sur un oscillateur de référence, fournit trois sorties OL1, OL2, OL3, à des fréquences calées les unes par rapport aux autres.

Le récepteur comprend ensuite, pour la voie GPS, un amplificateur à contrôle de gain 32 suivi d'un convertisseur analogique-numérique 34, et, pour la voie GLONASS, un amplificateur à contrôle de gain 36 suivi d'un convertisseur analogique-numérique 38. Le contrôle de gain est utilisé si les convertisseurs codent le signal analogique sur plusieurs bits, mais un codage sur un bit sans contrôle de gain est aussi possible dans certains cas. Les informations de contrôle de gain proviennent de calculs statistiques effectués sur des séries d'échantillons du signal numérisé.

Les convertisseurs travaillent à une fréquence d'échantillonnage Fc largement supérieure à deux fois la plus haute fréquence transposée susceptible d'être reçue et transmise aux convertisseurs. Pour la voie GLONASS, la fréquence la plus haute est Ftn, qui peut être de l'ordre de 20 MHz. Il faut alors en pratique une fréquence de conversion supérieure à 50 MHz, par exemple égale à 60 MHz. Par commodité, on prendra de préférence le même type de convertisseur et la même fréquence de travail Fc pour la voie GPS, car les signaux produits sont traités ensuite par les mêmes circuits indépendamment de leur origine.

Les convertisseurs produisent des signaux numériques qui sont des échantillons successifs, fournis à la cadence Fc, d'un signal analogique qui comprend une ou plusieurs fréquences porteuses transposées (Ft0 pour le convertisseur 34, Ft1 à Ftn pour le convertisseur 38), modifiées par effet Doppler et modulées en phase par les codes pseudo-aléatoires et les données de navigation de chacun des satellites visibles depuis le récepteur.

Ces signaux numériques porteurs d'information sont appliqués à un circuit de traitement numérique de signal 40, contrôlé par un processeur de calcul 50 communiquant avec le circuit 40 par l'intermédiaire d'un bus d'informations 60 et d'un bus de contrôle 70. Le processeur de calcul communique lui-même avec un microprocesseur 80 qui effectue les calculs de position à partir des informations tirées du circuit de traitement de signal 40 et du processeur de calcul 50. Le microprocesseur 80 fonctionne avec un logiciel 90 qu'on peut appeler "logiciel PVT" car c'est celui qui calcule la position PVT ("Point, Vitesse, Temps) à partir d'informations numériques fournies par le processeur de calcul. Le microprocesseur 80 est contrôlé par l'utilisateur du récepteur, qui peut communiquer avec lui à partir de périphériques multiusages (écran, clavier, imprimante, etc.) ou à partir de boutons de commande et de systèmes de visualisation spécialisés. Le processeur de calcul 50 et le microprocesseur 80 peuvent être confondus en un seul microprocesseur.

On voit donc sur la figure 1 qu'il y a deux voies distinctes pour extraire les informations reçues, selon qu'on souhaite utiliser le réseau GPS ou le réseau GLONASS. Toutefois, il faut comprendre que cette solution à voies séparées résulte uniquement de ce que la fréquence GPS de 1575,42 MHz est assez éloignée de la fréquence maximale GLONASS (1617 MHz environ). L'écart est de plus de 40 MHz. Si on réalise dans l'avenir (technologies à semiconducteurs rapides, GaAs, Germanium, supraconducteurs, etc.) des convertisseurs analogiques-numériques fonctionnant à 100 MHz ou plus, la voie GPS devient inutile et on peut dans le circuit de la figure 1 ne conserver que la voie GLONASS pour faire passer les signaux GLONASS et les signaux GPS. Le principe est qu'une seule voie suffit si la fréquence de porteuse unique L1 du premier réseau est suffisamment proche des fréquences de porteuses L1 du deuxième réseau.

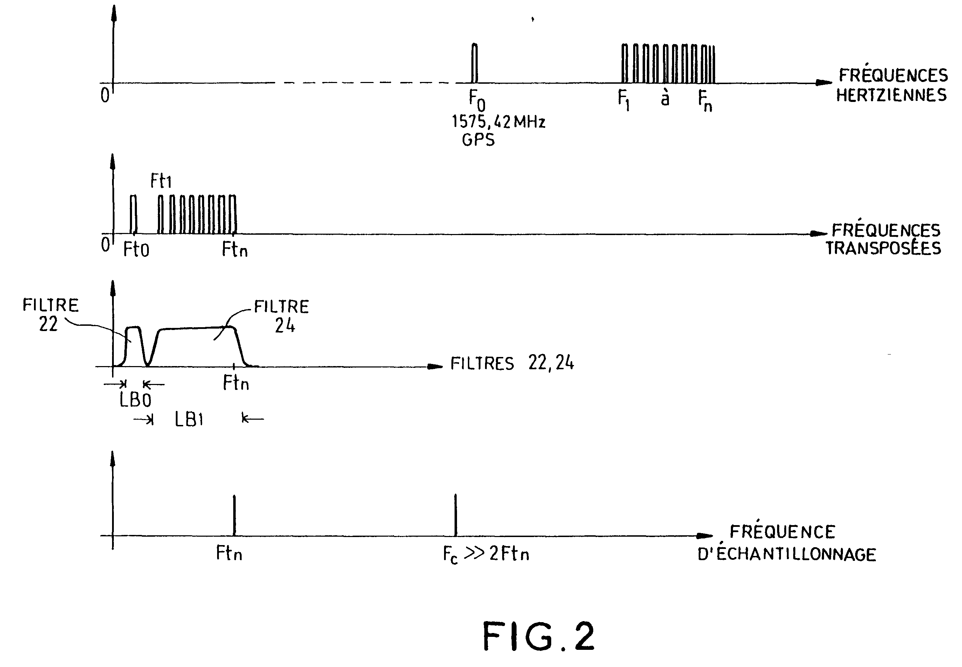

La figure 2 représente schématiquement la répartition des fréquences porteuses GPS (F0) et GLONASS (F1 à Fn), la répartition correspondante des fréquences transposées GPS (Ft0, éventuellement nulle ou égale à la fréquence Doppler due au mouvement relatif du récepteur et du satellite) et GLONASS (Ft1 à Ftn), la largeur de bande LB0 du filtre 22, et la largeur de bande LB1 du filtre 24. La fréquence de travail Fc du convertisseur 38 est largement supérieure à 2xFtn, par exemple environ 60 MHz si Ftn est proche de 20 MHz.

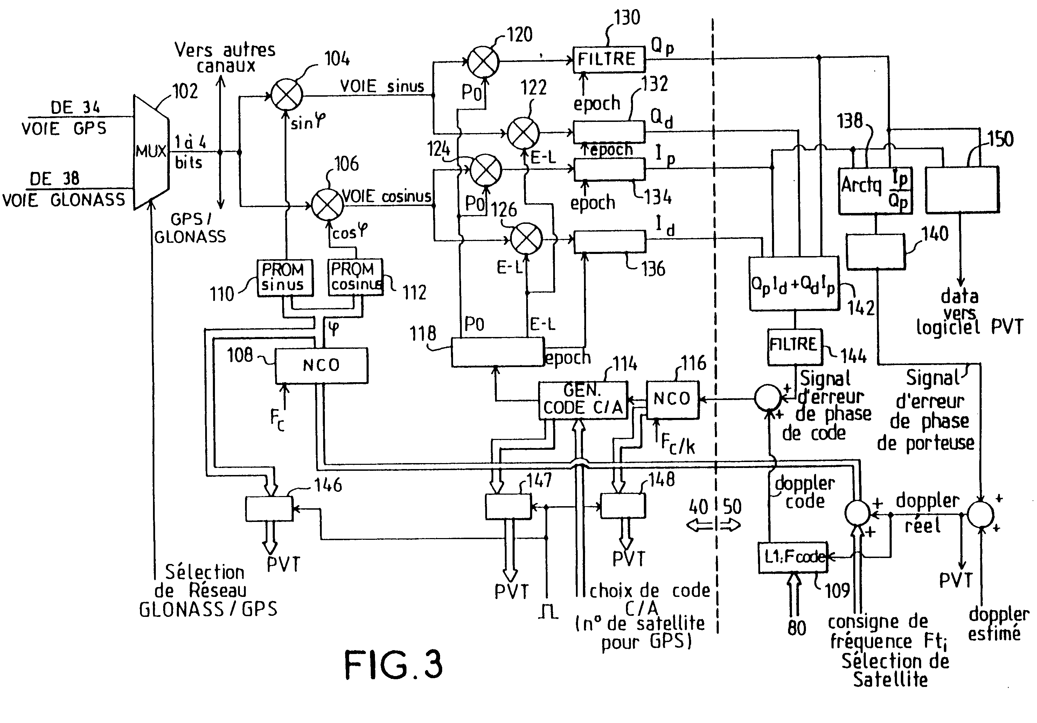

La figure 3 représente l'architecture générale du circuit de traitement de signal 40 du récepteur selon l'invention; une partie des circuits du processeur de calcul 50 est également représentée. Comme on va le voir, le circuit de traitement de signal 40 ne comporte pas des voies séparées pour le traitement des signaux GPS et pour le traitement des signaux GLONASS. Seul un multiplexeur 102, à l'entrée du circuit 40, reçoit sur deux entrées les signaux numériques issus des convertisseurs 34 et 38 et permet de choisir, en fonction d'une commande de l'utilisateur, si on veut utiliser le réseau GPS ou le réseau GLONASS. Les signaux sélectionnés par le multiplexeur 102 sont traités par le circuit 40 qui accepte aussi bien les signaux issus de la voie GPS que les signaux issus de la voie GLONASS bien qu'ils correspondent à des bandes de fréquences différentes.

Le circuit de traitement 40 comprend ici plusieurs canaux (en principe quatre ou plus); ils sont identiques et seul un canal sera décrit en détail. Tous les canaux reçoivent en parallèle les signaux issus du multiplexeur. Chaque canal est programmé pour recevoir les signaux d'un satellite déterminé visible en ligne directe du récepteur, mais n'importe quel canal peut être programmé pour recevoir les signaux de n'importe quel satellite GPS ou GLONASS (ou RGIC).

Un canal comprend essentiellement :
- un générateur de fréquence porteuse transposée locale pour créer un signal local à une fréquence voisine de celle des fréquences porteuses transposées qu'on désire utiliser;
- un générateur de code pour créer un code pseudo-aléatoire local identique à un code pseudo-aléatoire qu'on souhaite détecter;
- une boucle d'asservissement de phase de porteuse et de phase de code aléatoire, boucle qui produit un signal numérique d'erreur de phase de porteuse et un signal numérique d'erreur de phase de code, et qui a pour rôles d'une part d'asservir la phase (et la fréquence) du générateur de fréquence locale sur la phase (et la fréquence) du signal reçu du multiplexeur 102, et d'autre part d'asservir la phase du code pseudo-aléatoire local sur la phase du code aléatoire éventuellement présent dans le signal fourni par le multiplexeur. Les signaux d'erreur agissent sur le générateur de fréquence local et sur le générateur de code local et sont produits par un logiciel de calcul exécuté par le processeur de calcul numérique 50.
   On va décrire maintenant en détail les différents éléments mentionnés ci-dessus, présents dans chaque canal du circuit de traitement de signal.
   Bien qu'il y ait à la fois un asservissement de phase de porteuse et un asservissement de phase de code, on ne peut pas considérer qu'il y a deux boucles d'asservissement séparées. En effet, comme on va le voir, dans la pratique les deux asservissements sont imbriqués l'un dans l'autre.
   Les signaux GPS ou GLONASS issus du multiplexeur 102 sont appliqués à deux multiplicateurs numériques 104 et 106 qui reçoivent par ailleurs un signal numérique représentant le sinus (pour l'un des multiplicateurs) et le cosinus (pour l'autre) d'un signal de phase numérique périodique produit par un oscillateur à contrôle numérique de phase 108. Cet oscillateur à contrôle numérique de phase constitue le générateur de fréquence locale mentionné ci-dessus. La fréquence de calcul de l'oscillateur 108, c'est-à-dire la fréquence à laquelle il fournit des incréments de phase, est une fréquence élevée, qui doit être supérieure à deux fois la fréquence maximale de porteuse transposée présente à l'entrée du multiplexeur. La fréquence de calcul est de préférence de 60 MHz dans la pratique. C'est en principe la même que la fréquence d'échantillonnage Fc des convertisseurs 34 et 38, mais ce n'est pas obligatoire.
   L'oscillateur 108 possède une entrée numérique de contrôle par laquelle on peut imposer la valeur des incréments de phase qu'il ajoute à chaque nouveau calcul. Le fonctionnement de l'oscillateur consiste en effet à répéter, à la fréquence Fc, une opération d'addition d'une phase de sortie précédente et d'un incrément imposé par l'entrée de contrôle, pour produire une nouvelle phase de sortie. Ici, l'entrée de contrôle impose un incrément de phase qui est la somme d'un signal d'erreur de phase de la boucle (signal d'erreur calculé à l'intérieur de la boucle par le processeur 50) et d'une valeur de consigne initiale prédéterminée. La valeur initiale est celle qui permet au générateur local de produire une fréquence locale nominale correspondant à une fréquence porteuse transposée bien déterminée. Cette fréquence transposée correspond à la fréquence porteuse nominale réelle d'un satellite déterminé (GPS ou GLONASS) sur lequel on cherche à se caler. La valeur initiale sert pour l'acquisition d'un signal de satellite déterminé et elle est donc imposée à la fois par le choix du réseau, GPS ou GLONASS, et, pour GLONASS, par le choix d'un satellite déterminé.
   L'utilisateur définit donc pour un canal donné, par l'intermédiaire du microprocesseur 80, la fréquence de consigne initiale désirée appliquée à l'oscillateur 108 en fonction du satellite recherché pour ce canal.
   Dans un processus de calcul itératif continu du point PVT, le logiciel de calcul de point fournit en principe une valeur Doppler estimée (résultant des calculs de point PVT précédents), de sorte qu'on peut considérer, conformément à la représentation schématique de la figure 3, que le signal de commande de l'oscillateur numérique 108 est la somme
- d'une valeur initiale définie par l'utilisateur (qui sélectionne soit un numéro de satellite déterminé GLONASS soit l'ensemble des satellites GPS); c'est la consigne de fréquence;
- d'une valeur Doppler estimée, fournie par le logiciel PVT;
- et d'un signal d'erreur de phase de porteuse qui ferme la boucle d'asservissement.

La somme de la valeur Doppler estimée et du signal d'erreur de phase de porteuse représente la valeur Doppler réelle. Le signal numérique représentant cette valeur est envoyé au logiciel PVT 90 et est utilisé d'autre part, après division numérique dans le rapport fréquence de porteuse L1 sur fréquence de code (rapport dépendant donc du canal GPS ou GLONASS choisi), comme signal de décalage Doppler dans la boucle d'asservissement de code. Un diviseur numérique programmable 109, contrôlé par le microprocesseur 80, a été représenté à cet effet sur la figure 3.

L'oscillateur 108 fournit donc un signal à une fréquence transposée désirée, et il est asservi par le signal d'erreur de phase pour se caler en phase et en fréquence exactement sur un signal qui parvient du satellite recherché, ce signal ayant été émis sur une porteuse L1 correspondant à cette fréquence transposée mais pouvant être affecté d'un décalage Doppler.

L'asservissement se fait ici par calcul numérique et utilise les fonctions sinus et cosinus de la phase délivrée par l'oscillateur 108.

Les fonctions sinus et cosinus peuvent être obtenues à partir d'une table numérique. Une mémoire PROM de sinus 110 et une mémoire PROM de cosinus 112 sont à cet effet intercalées entre la sortie de l'oscillateur 108 et les multiplicateurs 104 et 106.

Les sorties des multiplicateurs représentent donc deux signaux en quadrature de phase dont les spectres comportent une composante basse fréquence qui représente le décalage entre la transposée de la fréquence satellite reçue et la fréquence localement produite. Cette composante de décalage est utilisée pour produire le signal d'erreur de phase de porteuse mentionné plus haut, qui tend à ramener le décalage à zéro.

Les signaux de sortie des multiplicateurs 104 et 106 subissent alors une corrélation dans la boucle d'asservissement mentionnée ci-dessus, pour détecter l'existence, dans le signal reçu, d'un code pseudo-aléatoire correspondant à un satellite recherché . On corrèle donc ces signaux, qui transportent d'une manière inhérente une modulation par le code pseudo-aléatoire connu émis par le satellite sur lequel on veut fonder une mesure, avec un code pseudo-aléatoire identique, produit localement par un générateur de code pseudo-aléatoire 114. La corrélation produit un signal de corrélation que l'on utilise pour décaler l'instant de démarrage du code local (instant repéré par exemple par le bit "epoch") jusqu'à ce que le signal de corrélation indique que le code local et le code reçu sont parfaitement synchrones. Le signal de corrélation présente un pic de corrélation, ou un zéro de corrélation (selon les types de corrélateurs) indiquant cette synchronisation. Il ne reste ensuite qu'à mesurer l'instant de départ du code local pour déterminer ensuite par calcul la position du satellite. Cet instant de départ est déterminé par examen de l'état du code pseudo-aléatoire à un instant donné et par examen de la phase d'un oscillateur qui pilote le générateur de code 114. Le microprocesseur 80 définit cet instant et recueille ces informations qui sont exploitées par le logiciel PVT 90.

Comme la boucle de corrélation de code est imbriquée dans la boucle d'asservissement de phase de porteuse, l'effet Doppler qui est présent dans le signal reçu, et donc présent dans la fréquence de transitions du code pseudo-aléatoire reçu, n'a pas d'incidence sur la corrélation : le code local est produit avec une fréquence de transitions qui est asservie sur la fréquence de la porteuse réellement reçue, ce qui rattrape toute erreur de synchronisation due à l'effet Doppler. Le diviseur programmable 109 participe à cette correction de fréquence Doppler en ajoutant une correction au signal d'erreur de phase de code qui est produit par calcul numérique dans la boucle d'asservissement.

Le générateur de code local 114 reçoit un signal d'horloge (pour définir les transitions de code) depuis un oscillateur à contrôle numérique de phase 116. Cet oscillateur reçoit sur une entrée de commande le signal d'erreur de phase de code avec la correction Doppler; il reçoit donc un signal qui représente l'écart de synchronisation entre le code local et le code reçu; ce signal résulte de la corrélation entre ces deux codes; il tend à ramener la phase et la fréquence du code pseudo-aléatoire local à la valeur de phase et de fréquence du code identique présent dans le signal reçu du satellite recherché. La fréquence d'échantillonnage de cet oscillateur (fréquence de calcul des échantillons de phase par incrémentations successives) est de préférence un sous-multiple Fc/k de la fréquence d'échantillonnage Fc.

L'oscillateur 116 fournit à chaque instant une valeur de phase qui peut être lue (pour le calcul du point PVT) mais c'est la sortie de retenue ("ripple carry") de l'oscillateur qui est appliquée au générateur de code 114 pour définir les instants de transition du code local.

Le générateur de code pseudo-aléatoire est programmable, c'est-à-dire qu'il peut produire une séquence pseudo-aléatoire quelconque parmi la série de séquences définies dans le système GPS et dans le système GLONASS, et éventuellement d'autres encore. Il possède à cet effet une entrée de sélection de code qui reçoit une instruction représentant un numéro de séquence parmi N possibles. Cette instruction est fournie par l'utilisateur, donc par le microprocesseur de contrôle 80.

La corrélation est effectuée par multiplication entre le code local et le signal numérisé résultant de la multiplication par le sinus et le cosinus de la fréquence porteuse locale. Les voies sinus et cosinus comportent en effet, comme le signal numérisé de départ, la modulation pseudo-aléatoire émise par le satellite, et la corrélation est possible sur ces voies.

Le code pseudo-aléatoire local produit par le générateur 114 pourrait être utilisé directement pour la corrélation avec les signaux reçus du satellite. Toutefois, on préfère en général effectuer une corrélation plus précise utilisant à la fois le code lui-même et le code avancé et/ou retardé d'un court instant. Typiquement, on peut utiliser :
- un code P0 appelé code ponctuel (synchrone avec le code trouvé dans le signal reçu du satellite),
- un code avancé E (pour "early"), en avance d'une fraction de moment (un moment, ou "chip" en anglais, correspond au temps de référence minimum séparant deux transitions élémentaires du code),
- et un code retardé L (pour "late"), en retard d'une fraction de moment.

Un procédé simple consiste à effectuer une corrélation avec le code ponctuel P et la différence entre les codes E et L. Sur la figure 3, on a représenté un circuit combinatoire 118 en sortie du générateur de code 114 pour créer les codes ponctuel P et le code différence E-L à partir du code de sortie du générateur.

La corrélation s'effectue dans des multiplicateurs numériques et des filtres numériques qui sont insérés dans les voies en quadrature de phase (sinus et cosinus) de la boucle d'asservissement, c'est-à-dire en sortie des multiplicateurs 104 et 106. La voie sinus et la voie cosinus sont multipliées chacune d'une part par le code ponctuel P0 et d'autre part par le code différence E-L, grâce à des multiplicateurs numériques 120, 122, 124, 126, permettant à chaque instant de multiplier une valeur numérique (codée sur 13 bits par exemple) avec un bit du code pseudo-aléatoire local.

Les sorties des multiplicateurs 120 à 126 passent dans des filtres numériques 130 à 136 qui sont des intégrateurs du type "integre and dump", dont la fonction est d'intégrer les résultats des multiplications pendant la durée de 1 milliseconde correspondant à une durée complète de séquence pseudo-aléatoire, et de revenir à zéro périodiquement à la fin de chaque séquence. L'intégration est une accumulation dans un compteur qui s'incrémente, se décrémente, ou reste inchangé en fonction du signe et de l'amplitude du signal numérique qu'il reçoit du multiplicateur qui le précède. Le retour à zéro est commandé par le bit epoch de la séquence ponctuelle. Ces intégrateurs fournissent des signaux à basse fréquence (1kHz), par exemple sur 8 bits chacun, Ip, Qp, Id, Qp, qui sont la base de la fonction de corrélation. Ces signaux représentent en effet une indication de corrélation sur la voie sinus et cosinus, par un code ponctuel P0 et par un code différence E-L. Ils sont fournis au processeur de calcul 50 qui les utilise pour effectuer un calcul de signal d'erreur de phase de code destiné à l'oscillateur 116, fermant ainsi la boucle d'asservissement de phase de code. Ils servent également au calcul du signal d'erreur de phase de porteuse destiné à l'oscillateur 108, fermant ainsi la boucle d'asservissement de phase de porteuse.

On notera que le fonctionnement des filtres 130 à 136 est partiellement piloté par logiciel et que ce fonctionnement peut être modifié selon qu'on travaille en GPS ou en GLONASS, pour tenir compte de petites différences telles que la différence de fréquence de code.

Le signal d'erreur de phase de porteuse est produit dans un discriminateur 138 à partir d'un calcul du type Arctg(Qp/Ip) suivi d'un filtre numérique 140. Le calcul du signal d'erreur de phase de porteuse ne fait pas intervenir la corrélation par le code différence E-L.

Le signal d'erreur de phase de code est produit dans un discriminateur 142 à partir d'un calcul faisant intervenir par exemple la somme de produits Qd.Ip + Qp.Id, suivi d'un filtre numérique 144 à très basse fréquence. Le calcul fait intervenir la corrélation par le code ponctuel et la corrélation par le code différence.

Le signal d'erreur de phase de code, comme le signal d'erreur de phase de porteuse, comportent des informations qui peuvent être transmises au processeur de calcul 50 et éventuellement au microprocesseur 80 pour permettre de calculer la position (PVT) du récepteur. Par exemple, ils comportent de manière inhérente une information de décalage Doppler, d'où peut être extraite la vitesse relative du récepteur par rapport au satellite.

En pratique, le logiciel de calcul du point PVT envoie une impulsion de lecture simultanément à tous les canaux, pour lire à cet instant l'état de phase de la porteuse, l'état de phase du code, et la valeur du code. Ces trois informations, recueillies dans la boucle d'asservissement de chacun des canaux, permettent de calculer la distance du récepteur à chacun des différents satellites observés.

On a représenté sur la figure 3 des registres 146, 147, 148 recevant respectivement, au moment de l'impulsion de lecture,
- la phase de l'oscillateur 108; représentant la phase de la porteuse à cet instant;
- l'état du code pseudo-aléatoire à cet instant, défini par exemple par 10 bits significatifs présents sur les sorties parallèles du générateur de code 114;
- et la phase exacte du code, à une fraction de moment près, définie par la phase précise de l'oscillateur 116.

Le décodage des données de navigation, envoyées par les satellites en modulation DPSK à basse fréquence (50 ou 100 Hz), se fait classiquement dans un circuit 150 du processeur de calcul 50; ce circuit détecte les changements de phase dus aux données de navigation, qui sont d'ailleurs synchronisés à l'émission avec le bit epoch des séquences pseudo-aléatoires. Les données de navigation sont envoyées au logiciel 90 de calcul du point PVT. Les données détectées sont par ailleurs prises en compte par le processeur de calcul 50 et le circuit 40 pour que les transitions liées aux données ne perturbent pas la boucle d'asservissement.

On ainsi décrit l'essentiel de l'architecture du récepteur selon l'invention, qui permet de n'utiliser qu'un nombre de canaux limité pour recevoir indifféremment plusieurs types de réseaux de satellites. On comprendra que ce qui a été dit à propos de la détection de signal sur les porteuses L1 est applicable aussi aux porteuses L2. Des canaux banalisés de traitement numérique identiques à ceux des porteuses L1 peuvent être utilisés pour les fréquences L2 GPS et GLONASS; on transposera alors les porteuses L2 dans des bandes de fréquence compatibles avec le fonctionnement de ces canaux. Ou bien, les mêmes canaux peuvent servir pour L1 et L2, avec une transposition de fréquence alternée pour L1 et L2 et un multiplexage temporel des signaux sur L1 et sur L2.

## Revendications

1. Récepteur de signaux satellites, apte à recevoir et traiter des signaux émis par des satellites appartenant à un réseau à une seule fréquence porteuse et des signaux émis par des satellites appartenant à un réseau à plusieurs fréquences porteuses, ce récepteur comportant une chaîne de réception de signaux radio (10, 12, 14, 16, 18, 34, 38), comportant des circuits de transposition des fréquences porteuses reçues vers plusieurs fréquences transposées différentes selon la fréquence porteuse reçue, et au moins un convertisseur analogique-numérique (38) permettant de convertir les signaux ainsi transposés en un signal numérique à plusieurs fréquences porteuses transposées correspondant à plusieurs satellites reçus simultanément et émettant sur des porteuses différentes, le récepteur comportant encore des canaux de traitement numérique de signal à boucle d'asservissement, et des moyens (50, 80) de calcul de position à partir de valeurs numériques fournies dans la boucle d'asservissement,
le récepteur étant **caractérisé en ce qu'**il comporte :
- plusieurs canaux identiques de traitement numérique de signal, recevant le signal numérique à plusieurs fréquences porteuses transposées, chaque canal comportant une boucle d'asservissement de phase de porteuse transposée et de phase de code aléatoire, la boucle d'asservissement comportant d'une part au moins un oscillateur à contrôle numérique de phase (108) commandé par un signal de consigne de fréquence et un signal d'erreur de phase, et d'autre part un générateur de code pseudo-aléatoire local programmable (114),
- des moyens de sélection de code permettant à un utilisateur d'appliquer au générateur de code de chaque canal identique un signal de sélection d'un code parmi plusieurs codes possibles, les différents codes correspondant aux différents satellites des deux réseaux,
- des moyens de sélection de fréquence, permettant à l'utilisateur d'appliquer à l'oscillateur de chaque canal identique un signal de consigne de fréquence parmi plusieurs possibles, les différents signaux de consigne correspondant aux différents satellites du deuxième réseau ainsi qu'à l'ensemble des satellites du premier réseau.

2. Récepteur selon la revendication 1, **caractérisé en ce que** le convertisseur analogique-numérique (38) travaille à une fréquence d'échantillonnage (Fc) supérieure à deux fois la fréquence porteuse transposée la plus élevée présente dans les signaux qu'il peut recevoir des circuits de transposition de fréquence.

3. Récepteur selon la revendication 2, **caractérisé en ce qu'**il comporte un deuxième convertisseur analogique-numérique (34) pour recevoir des signaux à au moins une autre fréquence transposée, et un multiplexeur (102) pour transmettre aux canaux de traitement de signal la sortie de l'un ou l'autre des convertisseurs.

4. Récepteur selon l'une des revendications 1 à 3, **caractérisé en ce que** les différents signaux de consigne de fréquence agissent sur l'oscillateur pour que ce dernier fournisse des fréquences nominales respectives égales aux fréquences transposées correspondant à la transposition des différentes fréquences porteuses nominales des satellites des deux réseaux.

5. Récepteur selon la revendication 1, **caractérisé en ce que** l'oscillateur à contrôle numérique de phase (108) fonctionne avec une fréquence de calcul supérieure à deux fois la fréquence transposée la plus élevée.

6. Récepteur selon l'une des revendications 1 à 5, **caractérisé en ce que** la boucle d'asservissement comporte des moyens (110) pour calculer le sinus et le cosinus d'une phase périodique définie en sortie de l'oscillateur à contrôle numérique de phase, et des moyens (104, 106) pour multiplier le sinus et le cosinus ainsi produits par le signal numérisé en sortie de la chaîne de réception, pour produire deux signaux en quadrature de phase.

7. Récepteur selon la revendication 6, **caractérisé en ce que** le générateur de code pseudo-aléatoire est apte à fournir un code local ponctuel, un code avancé et un code retardé, et **en ce qu'**il est prévu des moyens (120 à 126) pour multiplier les signaux en quadrature de phase par le code pseudo-aléatoire local ponctuel et par la différence entre des codes pseudo-aléatoires locaux avancé et retardé.

8. Récepteur selon l'une des revendications 1 à 7, **caractérisé en ce que** le générateur de code pseudo-aléatoire est commandé par une horloge constituée par un oscillateur à contrôle numérique de phase (116), l'oscillateur recevant comme signal numérique d'entrée un signal d'erreur de phase de code, le signal d'erreur indiquant un écart de synchronisation entre un code produit localement par le générateur de code et un code identique présent dans le signal reçu d'un satellite.

9. Récepteur selon l'une des revendications 1 à 8, **caractérisé en ce que** les circuits de transposition de fréquence comportent un étage final avec deux voies séparées, une voie pour recevoir les signaux du réseau à une seule fréquence et une voie pour recevoir les signaux du réseau à plusieurs fréquences, cette deuxième voie comportant un oscillateur commun (OL3) unique transposant les différentes fréquences porteuses en plusieurs fréquences porteuses transposées différentes.

10. Procédé pour recevoir dans un récepteur des signaux de satellites et déterminer une position de récepteur à partir des signaux reçus, les satellites appartenant soit à un premier réseau à une seule fréquence porteuse soit à un deuxième réseau à plusieurs fréquences porteuses, dans lequel on reçoit sur une antenne les signaux de plusieurs satellites, on transpose la fréquence porteuse des différents signaux reçus, en produisant plusieurs fréquences porteuses transposées différentes selon la porteuse reçue, on applique à au moins un convertisseur analogique-numérique commun plusieurs fréquences porteuses reçues simultanément et on convertit en signal numérique le signal composite correspondant,
ce procédé étant **caractérisé en ce que** :
- on applique les signaux numériques issus du convertisseur à plusieurs canaux de traitement de signal identiques comportant une boucle d'asservissement avec un oscillateur à commande numérique de phase et un générateur programmable de code local pseudo-aléatoire,
- pour chaque canal, on sélectionne une fréquence de consigne correspondant à une fréquence transposée particulière, parmi plusieurs consignes possibles correspondant à des satellites différents, et on applique un signal de consigne correspondant à l'oscillateur à commande numérique de phase, pour faire produire la fréquence de consigne par cet oscillateur, l'oscillateur recevant par ailleurs un signal d'erreur de phase établi par la boucle d'asservissement de phase dans laquelle il est situé;
- pour chaque canal, on sélectionne un code pseudo-aléatoire, et on applique un signal de consigne correspondant au générateur programmable de code local pseudo-aléatoire, pour faire produire par le générateur un code désiré parmi plusieurs possibles, le générateur de code étant situé dans la boucle d'asservissement et des moyens de corrélation étant prévus pour décaler le code produit jusqu'à le mettre en synchronisme avec un code identique présent dans la modulation du signal reçu du convertisseur;
- on calcule une position de récepteur à partir de valeurs numériques fournies dans la boucle d'asservissement des différents canaux.

## Patentansprüche

1. Empfänger für Satellitensignale, der Signale, die von zu einem Netz mit einer einzigen Trägerfrequenz gehörenden Satelliten ausgesendet werden, und Signale, die von zu einem Netz mit mehreren Trägerfrequenzen gehörenden Satelliten ausgesendet werden, empfangen und verarbeiten kann, wobei dieser Empfänger eine Funksignal-Empfangskette (10, 12, 14, 16, 18, 34, 38) umfaßt, die Schaltungen zur Umsetzung der empfangenen Trägerfrequenzen in mehrere verschiedene umgesetzte Frequenzen entsprechend der empfangenen Trägerfrequenz sowie wenigstens einen Analog/Digital-Umsetzer (38) enthält, der die Umsetzung der somit umgesetzten Signale in ein digitales Signal mit mehreren umgesetzten Trägerfrequenzen, die mehreren gleichzeitig empfangenen und auf verschiedenen Trägern sendenden Satelliten entsprechen, ermöglicht, wobei der Empfänger außerdem Kanäle zur digitalen Signalverarbeitung mit Regelschleife sowie Mittel (50, 80) zum Berechnen der Position anhand der in der Regelschleife gelieferten digitalen Werte umfaßt,
wobei der Empfänger **dadurch gekennzeichnet ist, daß** er umfaßt:
- mehrere völlig gleiche Kanäle zur digitalen Signalverarbeitung, die das digitale Signal mit mehreren umgesetzten Trägerfrequenzen empfangen,
wobei jeder Kanal eine Regelschleife für die Phase des umgesetzten Trägers und für die Phase mit zufälligem Code enthält, wobei die Regelschleife einerseits wenigstens einen Oszillator (108) mit digitaler Phasensteuerung, der durch ein Sollfrequenzsignal und ein Phasenfehlersignal gesteuert wird, und andererseits einen programmierbaren Generator (114) für lokalen pseudozufälligen Code umfaßt,
- Codeauswahlmittel, die einem Anwender ermöglichen, in den Codegenerator jedes völlig gleichen Kanals ein Auswahlsignal für einen Code aus mehreren möglichen Codes einzugeben, wobei die verschiedenen Codes den verschiedenen Satelliten der beiden Netze entsprechen,
- Frequenzauswahlmittel, die einem Anwender ermöglichen, in den Oszillator jedes völlig gleichen Kanals eines von mehreren möglichen Sollfrequenzsignalen einzugeben, wobei die verschiedenen Sollsignale den verschiedenen Satelliten des zweiten Netzes sowie der Gesamtheit der Satelliten des ersten Netzes entsprechen.

2. Empfänger nach Anspruch 1, **dadurch gekennzeichnet, daß** der Analog/Digital-Umsetzer (38) mit einer Abtastfrequenz (Fc) arbeitet, die höher als die doppelte höchste umgesetzte Trägerfrequenz ist, die in den Signalen vorhanden ist, die er von den Frequenzumsetzungsschaltungen empfangen kann.

3. Empfänger nach Anspruch 2, **dadurch gekennzeichnet, daß** er einen zweiten Analog/Digital-Umsetzer (34), der Signale mit wenigstens einer anderen umgesetzten Frequenz empfangen kann, und einen Multiplexer (102), der an die Signalverarbeitungskanäle das Ausgangssignal des einen oder des anderen Umsetzers übertragen kann, umfaßt.

4. Empfänger nach einem der Ansprüche 1 bis 3, **dadurch gekennzeichnet, daß** die verschiedenen Sollfrequenzsignale auf den Oszillator einwirken, damit dieser letztere Nennfrequenzen liefert, die gleich den jeweiligen umgesetzten Frequenzen sind, die der Umsetzung der verschiedenen Nennträgerfrequenzen der Satelliten der beiden Netze entsprechen.

5. Empfänger nach Anspruch 1, **dadurch gekennzeichnet, daß** der Oszillator (108) mit digitaler Phasensteuerung mit einer Rechenfrequenz arbeitet, die höher als die doppelte höchste umgesetzte Frequenz ist.

6. Empfänger nach einem der Ansprüche 1 bis 5, **dadurch gekennzeichnet, daß** die Regelschleife Mittel (110), die den Sinus und den Kosinus einer am Ausgang des Oszillators mit digitaler Phasensteuerung definierten periodischen Phase berechnen, und Mittel (104, 106), die den Sinus und den Kosinus sowie Produkte mit dem digitalisierten Signal am Ausgang der Empfangskette multiplizieren, um zwei Signale mit 90°-Phasenverschiebung zu erzeugen, umfaßt.

7. Empfänger nach Anspruch 6, **dadurch gekennzeichnet, daß** der Generator für pseudozufälligen Code einen punktförmigen lokalen Code, einen voreilenden Code und einen nacheilenden Code liefern kann und daß Mittel (120 bis 126) vorgesehen sind, die die Signale mit 90°-Phasenverschiebung mit dem punktförmigen lokalen pseudozufälligen Code und mit der Differenz zwischen den voreilenden und nacheilenden lokalen pseudozufälligen Codes multiplizieren.

8. Empfänger nach einem der Ansprüche 1 bis 7, **dadurch gekennzeichnet, daß** der Generator für pseudozufälligen Code durch einen Taktgeber gesteuert wird, der aus einem Oszillator (116) mit digitaler Phasensteuerung gebildet ist, wobei der Oszillator als digitales Eingangssignal ein Codephasen-Fehlersignal empfängt, das einen Synchronisationsabstand zwischen einem vom Codegenerator lokal erzeugten Code und einen völlig gleichen Code, der in dem von einem Satelliten empfangenen Signal vorhanden ist, angibt.

9. Empfänger nach einem der Ansprüche 1 bis 8, **dadurch gekennzeichnet, daß** die Frequenzumsetzungsschaltungen eine Endstufe mit zwei getrennten Wegen umfassen, wobei ein Weg dazu vorgesehen ist, die Signale vom Netz mit einer einzigen Frequenz zu empfangen, und ein Weg dazu vorgesehen ist, die Signale vom Netz mit mehreren Frequenzen zu empfangen, wobei dieser zweite Weg einen einzigen gemeinsamen Oszillator (OL3) umfaßt, der die verschiedenen Trägerfrequenzen in mehrere verschiedene umgesetzte Trägerfrequenzen umsetzt.

10. Verfahren zum Empfangen von Satellitensignalen in einem Empfänger und zum Bestimmen einer Position des Empfängers anhand der empfangenen Signale, wobei die Satelliten entweder zu einem ersten Netz mit einer einzigen Trägerfrequenz oder zu einem zweiten Netz mit mehreren Trägerfrequenzen gehören, wobei in dem Verfahren die Signale mehrerer Satelliten an einer Antenne empfangen werden, die Trägerfrequenz der verschiedenen empfangenen Signale umgesetzt wird, indem mehrere verschiedene umgesetzte Trägerfrequenzen je nach empfangenem Träger erzeugt werden, mehrere gleichzeitig empfangene Trägerfrequenzen in wenigstens einen gemeinsamen Analog/Digital-Umsetzer eingegeben werden und das entsprechende zusammengesetzte Signal in ein digitales Signal umgesetzt wird,
wobei dieses Verfahren **dadurch gekennzeichnet ist, daß**:
- die vom Umsetzer ausgegebenen digitalen Signale in mehrere völlig gleiche Signalverarbeitungskanäle eingegeben werden, die eine Regelschleife mit einem Oszillator mit digitaler Phasensteuerung und einen programmierbaren Generator für lokalen pseudozufälligen Code umfassen,
- für jeden Kanal aus mehreren möglichen Sollwerten, die verschiedenen Satelliten entsprechen, eine Sollfrequenz ausgewählt wird, die einer besonderen umgesetzten Frequenz entspricht, und ein entsprechendes Sollsignal in den Oszillator mit digitaler Phasensteuerung eingegeben wird, um durch diesen Oszillator die Sollfrequenz zu erzeugen, wobei der Oszillator außerdem ein Phasenfehlersignal empfängt, das von der Phasenregelschleife, in der er sich befindet, erstellt wird;
- für jeden Kanal ein Pseudozufallscode ausgewählt wird und ein entsprechendes Sollsignal in den programmierbaren Generator für lokalen pseudozufälligen Code eingegeben wird, um durch den Generator einen gewünschten von mehreren möglichen Codes zu erzeugen, wobei sich der Codegenerator in der Regelschleife befindet und wobei Korrelationsmittel vorgesehen sind, um den erzeugten Code soweit zu verschieben, bis er mit einem völlig gleichen Code, der in der Modulation des vom Umsetzer empfangenen Signals vorhanden ist, synchron ist;
- eine Position des Empfängers anhand der digitalen Werte berechnet wird, die in der Regelschleife der verschiedenen Kanäle geliefert werden.

## Claims

1. Receiver of satellite signals, able to receive and process signals transmitted by satellites belonging to a network with a single carrier frequency and signals transmitted by satellites belonging to a network with several carrier frequencies, this receiver comprising a radio signals reception chain (10, 12, 14, 16, 18, 34, 38) comprising circuits for transposing the carrier frequencies received to several transposed frequencies differing according to the carrier frequency received, and at least one analogue/digital converter (38) for converting the signals thus transposed into a digital signal with several transposed carrier frequencies corresponding to several satellites received simultaneously and transmitting on different carriers, the receiver furthermore comprising servocontrol loop-based digital signal processing channels, and means (50, 80) for computing position on the basis of digital values provided in the servocontrol loop,
the receiver being **characterized in that** it comprises :
- several identical digital signal processing channels which receive the digital signal with several transposed carrier frequencies, each channel comprising a random code phase- and transposed carrier phase-servocontrol loop, the servocontrol loop comprising on the one hand at least one digital phase control oscillator (108) controlled by a frequency set-point signal and a phase error signal and on the other hand a programmable local pseudo-random code generator (114),
- code selection means enabling a user to apply to the code generator of each identical channel a signal for selecting one code from several possible codes, the various codes corresponding to the various satellites of the two networks,
- frequency selection means, enabling the user to apply to the oscillator of each identical channel one from several possible frequency set-point signals, the various set-point signals corresponding to the various satellites of the second network as well as to all of the satellites of the first network;
- the receiver finally comprising means (50, 80) for computing position from digital values provided in the servocontrol loop.

2. Receiver according to Claim 1, **characterized in that** the analogue/digital converter (38) works at a sampling frequency (Fc) which is greater than twice the highest transposed carrier frequency present in the signals which it can receive from the frequency transposition circuits.

3. Receiver according to Claim 2, **characterized in that** it comprises a second analogue/digital converter (34) for receiving signals with at least one other transposed frequency, and a multiplexer (102) for transmitting the output of one or other of the converters to the signal processing channels.

4. Receiver according to one of Claims 1 to 3, **characterized in that** the various frequency set-point signals act on the oscillator so that the latter provides respective nominal frequencies equal to the transposed frequencies corresponding to the transposition of the various nominal carrier frequencies of the satellites of the two networks.

5. Receiver according to Claim 1, **characterized in that** the digital phase control oscillator (108) operates with a computation frequency which is greater than twice the highest transposed frequency.

6. Receiver according to one of Claims 1 to 5, **characterized in that** the servocontrol loop includes means (110) for computing the sine and cosine of a periodic phase defined at the output of the digital phase control oscillator, and means (104, 106) for multiplying the sine and cosine thus produced by the digitized signal output by the reception chain, so as to produce two phase quadrature signals.

7. Receiver according to Claim 6, **characterized in that** the pseudo-random code generator is able to provide a punctual local code, an early code and a late code, and **in that** means (120 to 126) are provided for multiplying the phase quadrature signals by the punctual local pseudo-random code and by the difference between the early and late local pseudo-random codes.

8. Receiver according to Claims 1 to 7, **characterized in that** the pseudo-random code generator is controlled by a clock consisting of a digital phase control oscillator (116), the oscillator receiving a code phase error signal as digital input signal, the error signal indicating a discrepancy of synchronization between a code produced locally by the code generator and an identical code present in the signal received from a satellite.

9. Receiver according to one of Claims 1 to 8, **characterized in that** the frequency transposition circuits include a final stage with two separate pathways, one pathway receiving the signals from the network with a single frequency and one pathway receiving the signals from the network with several frequencies, this second pathway comprising a single common oscillator (OL3) which transposes the various carrier frequencies into several different transposed carrier frequencies.

10. Process for receiving satellite signals in a receiver and determining a receiver position from the signals received, the satellites belonging either to a first network with a single carrier frequency or to a second network with several carrier frequencies, in which the signals from several satellites are received on an antenna, the carrier frequency of the various signals received are transposed, thereby producing several transposed carrier frequencies differing according to the carrier received, several simultaneously received carrier frequencies are applied to at least one common analogue/digital converter and the corresponding composite signal is converted into a digital signal,
- this process being **characterized in that**:
- the digital signals emanating from the converter are applied to several identical signal processing channels comprising a servocontrol loop with a digital phase control oscillator and to a programmable pseudo-random local code generator,
- for each channel, a set-point frequency is selected corresponding to a particular transposed frequency, from among several possible set-points corresponding to different satellites, and a corresponding set-point signal is applied to the digital phase control oscillator so as to make this oscillator produce the set-point frequency, the oscillator moreover receiving a phase error signal derived by the phase servocontrol loop in which it is located;
- for each channel, a pseudo-random code is selected, and a corresponding set-point signal is applied to the programmable pseudo-random local code generator so as to make the generator produce one desired code from several possible codes, the code generator being located in the servocontrol loop and correlation means being provided in order to shift the code produced so as to place it in synchronism with the identical code present in the modulation of the signal received from the converter;
- a receiver position is computed from digital values provided in the servocontrol loop of the different channels.
